# FASCICULE DE BREVET EUROPEEN

(11) **EP 2 552 849 B1**
(45) Date de publication et mention de la délivrance du brevet: **04.05.2016**
(21) Numéro de dépôt: 11710514.8
(22) Date de dépôt: 29.03.2011
(51) Int. Cl.: C04B 18/04, B09B 3/00, G21F 9/30, C04B 28/00, C23F 11/18

(54) **UTILISATION D'AGENTS ANTI-CORROSION POUR LE CONDITIONNEMENT DE MAGNÉSIUM MÉTAL, MATÉRIAU DE CONDITIONNEMENT AINSI OBTENU ET PROCÉDÉ DE PRÉPARATION**
VERWENDUNG VON KORROSIONSHEMMERN ZUR KONDITIONIERUNG VON MAGNESIUMMETALL, AUF DIESE WEISE HERGESTELLTES KONDITIONIERUNGSMATERIAL UND HERSTELLUNGSVERFAHREN
USE OF ANTICORROSION AGENTS FOR CONDITIONING MAGNESIUM METAL, CONDITIONING MATERIAL THUS OBTAINED AND PREPARATION PROCESS

(30) Priorité: 01.04.2010 FR 1052466
(43) Date de publication de la demande: 06.02.2013
(73) Titulaire: Commissariat à l'Énergie Atomique et aux Énergies Alternatives, 75015 Paris (FR)
(72) Inventeur: LAMBERTIN, David, 84860 Caderousse (FR); FRIZON, Fabien, F-30400 Villeneuve Lez Avignon (FR); BLACHERE, Adrien, F-84320 Entraigues Sur Sorgues (FR); BART, Florence, F-30200 Orsan (FR)
(74) Mandataire: Ilgart, Jean-Christophe
(86) Numéro de dépôt international: PCT/EP2011/054808
(87) Numéro de publication internationale: WO 2011/120960

(56) Documents cités:
- EP-A1- 0 129 491
- US-A- 4 943 394
- FAIRHALL G A ET AL: "Encapsulation of Magnox Swarf in cement in the United Kingdom", CEMENT AND CONCRETE RESEARCH 1992 MAR-MAY, vol. 22, no. 2-3, mars 1992 (1992-03), pages 293-298, XP002610393, cité dans la demande
- SETIADI A ET AL: "Corrosion of aluminium and magnesium in BFS composite cements", ADVANCES IN APPLIED CERAMICS AUGUST 2006 MANEY PUBLISHING GB, vol. 105, no. 4, août 2006 (2006-08), pages 191-196, XP8129281, DOI: DOI:10.1179/174367606X120142 cité dans la demande
- CHEMICAL ABSTRACTS, vol. 88, no. 4, 23 janvier 1978 (1978-01-23), Columbus, Ohio, US; abstract no.: 26819r, L.P.Kozhevnikova: "Effect of aluminum corrosion passivators on the swelling of porous concrete mixtures", page 226, XP00059674 & STROIT. MATER. IZDELIYA OSN. OTKHODOV PROM-STI. VERMIKULITA, 1976, pages 56-59, USSR
- A.P. ZOSIN ET AL: "Geopolymer materials based on magnesia-iron slags fro normalisation and storage of radioactive wastes", ATOMIC ENERGY, vol. 85, no. 1, 1998, pages 510-514, XP002610396, cité dans la demande

## Description

### DOMAINE TECHNIQUE

La présente invention appartient au domaine technique de l'élimination et du conditionnement des déchets tels que des déchets nucléaires métalliques contenant notamment du magnésium métal.

La présente invention propose une méthode pour diminuer le terme source d'hydrogène lors de l'immobilisation de magnésium métal par une matrice cimentaire. Plus particulièrement, la présente invention propose l'utilisation d'agents anti-corrosion pour diminuer la production d'hydrogène lors du conditionnement du magnésium métal dans une matrice cimentaire géopolymérique.

La présente invention concerne également les matériaux de conditionnement mis en oeuvre dans ce procédé et un procédé de préparation de tels matériaux.

### ÉTAT DE LA TECHNIQUE ANTÉRIEURE

Les installations nucléaires de type UNGG pour « Uranium Naturel - Graphite - Gaz » sont basées sur des réacteurs à uranium naturel modérés au graphite et refroidis. Dans ces installations, la matière fissile mise en oeuvre est un uranium naturel sous forme métallique, alors que le matériau de gainage est en magnésium métallique se présentant notamment sous forme d'un alliage.

L'exploitation de ce type d'installations a été arrêtée en France et leur démantèlement est en cours. En Angleterre, au contraire, ces installations ont connu un développement important sous le nom de MAGNOX (pour « MAGnesium Non OXidising ») en référence à l'alliage de magnésium utilisé dans ces dernières qui est un alliage de magnésium/aluminium.

Aussi bien le démantèlement que l'exploitation de telles installations produisent des déchets métalliques réactifs contenant du magnésium métallique (ou magnésium métal). Plusieurs procédés pour permettre le conditionnement de ces déchets ont été envisagés.

Toutefois, ils sont confrontés au problème d'un dégagement (ou de la production) d'hydrogène résultant de la corrosion du magnésium métallique en présence d'eau. Un tel dégagement peut être dommageable pour la stabilité des conditionnements et entraîne des risques d'accident lors de l'immobilisation, de l'entreposage, du stockage, de l'évacuation et/ou du transport de tels conditionnements.

Ainsi, l'utilisation l'un liant hydraulique de type ciment Portland pour l'enrobage des déchets métalliques réactifs contenant du magnésium métal est difficile car un dégagement d'hydrogène est provoqué par la réaction entre l'eau du ciment et le magnésium métal **[1].**

Cependant, depuis 1990, des déchets métalliques issus des réacteurs MAGNOX contenant entre autre du magnésium métal ont été conditionnés avec un mélange ciment Portland et cendres de hauts fourneaux ou cendres volantes **[1, 2, 3].** La stratégie de cette formulation est d'utiliser un minimum d'eau pour l'hydratation du ciment et atteindre un pH important (de l'ordre de 12.5) **[1].** Concernant la faible quantité d'eau à utiliser, Fairhall et Palmer préconisent d'employer une matrice cimentaire hydraulique présentant un rapport massique Eau/Ciment, ci-après désigné rapport E/C inférieur à 0,37 **[2].** De même, les matrices cimentaires décrites dans **[4]** présentent un rapport E/C égal à 0,33. Des dégagements d'hydrogène ont cependant été observés avec la formation d'hydroxyde de magnésium à la surface du magnésium métal provoquant des dégâts sur le colis **[4].**

Une solution alternative à l'utilisation de ciment Portland a été proposée avec l'utilisation de géopolymère minéral **[1, 5].**

Des essais d'enrobage de déchets de type MAGNOX à base de magnésium ont été réalisés avec des polymères organiques **[1, 6]** afin de limiter la quantité d'eau et ainsi éviter un dégagement d'hydrogène. En effet, des essais ont été conduits avec des polymères thermodurcissables tels que des résines époxy ou polyester. Toutefois, ces polymères organiques présentent plusieurs inconvénients tels qu'un durcissement rapide et donc désavantageux pour une utilisation industrielle et un coût élevé **[1].** Les travaux décrits dans **[6]** ont, pour leur part, testé l'efficacité d'une encapsulation par du polyuréthane de déchets de type MAGNOX dans des conditions d'incendie.

Les inventeurs se sont donc fixés pour but de proposer un procédé pour le conditionnement de déchets contenant du magnésium métal dans lequel l'hydrogène produit par la corrosion du magnésium métal est diminué fortement, voire inhibé.

Le magnésium métal et ses alliages sont largement étudiés pour des applications dans l'aéronautique et de nombreux traitements chimiques anti-corrosion sont disponibles dans la littérature **[7].** La plupart de ces traitements consiste à recouvrir d'un revêtement (ou « coating ») les pièces en magnésium métal ou en un de ses alliages, le revêtement contenant des agents tels que dichromates, silicates, phosphates et fluorures. De plus, concernant l'utilisation d'ions fluorure apportés sous forme de fluorure de potassium (KF), de fluorure de sodium (NaF) ou de fluorure d'ammonium (NH₄F) comme traitement anti-corrosion du magnésium métal, une étude électrochimique a permis de déterminer, en solution, les zones de pH et de concentration en ions fluorure où le magnésium métal présentait les courants de corrosion les plus faibles **[8].** Le pH et la concentration en fluorures doivent être respectivement supérieurs à 13 et 2 M.

Song et StJohn ont étudié l'effet anti-corrosion de solutions contenant de l'éthylène glycol sur du magnésium pur et ce, notamment pour des applications dans le domaine automobile **[9].** Les résultats de ces travaux ont montré que, d'une part, le taux de corrosion du magnésium diminue avec des concentrations croissantes en éthylène glycol et que, d'autre part, la corrosion du magnésium dans l'éthylène glycol peut être inhibée efficacement par l'addition de fluorures. De même, l'utilisation de fluorures comme inhibiteurs de corrosion du magnésium dans des acides organiques tels qu'une combinaison d'acide alkylbenzoïque et d'acide monobasique ou dibasique aliphatique a été proposée pour l'industrie automobile **[10].**

Récemment, une méthode de protection du magnésium métal en environnement basique mettant en oeuvre un mélange de fluorosilicate, de polyphosphate et d'acide organique a été proposée dans une demande de brevet chinois **[11].**

Toutefois, même si l'utilisation d'inhibiteurs de corrosion dans les bétons pour le génie civil est largement utilisée, l'homme du métier aurait été dissuadé d'en utiliser pour le conditionnement de déchets contenant du magnésium métal et ce, pour résoudre le problème de la production d'hydrogène. En effet, Fairhall et Palmer indiquent clairement que, lors d'essais réalisés au début des années 80, l'utilisation de chromates et de fluorures dans des matrices cimentaires n'avait eu aucun effet sur le taux de corrosion du magnésium métal et, par conséquent, sur la production d'hydrogène **[2].** Il convient, de plus, de remarquer qu'aucun détail technique et pratique relatif à cette utilisation n'est donné dans le document **[2].**

### EXPOSÉ DE L'INVENTION

La présente invention est définie par les revendications attenantes. La description qui suit est soumise à cette limitation.

La présente invention permet de résoudre les inconvénients des procédés de conditionnement de déchets contenant du magnésium métal de l'état de la technique et d'atteindre le but que se sont fixés les inventeurs à savoir proposer un procédé dans lequel la production d'hydrogène due à la corrosion oxydative du magnésium métal est diminuée, voire inhibée.

En effet, les inventeurs ont résolu ce problème technique en ajoutant des produits anti-corrosion directement dans le mélange cimentaire géopolymérique sec, dans la solution d'activation ou dans le coulis lors de l'enrobage par des matrices cimentaires des déchets magnésiens. Ces travaux ont ainsi permis de surmonter le préjugé technique de l'état de la technique selon lequel les chromates et les fluorures n'ont aucun effet sur la corrosion du magnésium métal et donc sur la production d'hydrogène.

L'ajout de produits anti-corrosion directement dans le mélange cimentaire géopolymérique sec, dans la solution d'activation ou dans le coulis obtenu permet d'éviter une étape de prétraitement du magnésium métal et donc des déchets le contenant avant leur conditionnement. De plus, la présence de produits anti-corrosion en excès dans l'enrobé final permet de garantir une efficacité dans le temps.

Le matériau de type matrice cimentaire dans lequel est ensuite incorporé le magnésium métal ou un déchet technologique contenant du magnésium métal est donc facile à préparer, facile à manipuler et prêt à l'emploi.

Plus particulièrement, la présente invention concerne l'utilisation d'au moins un additif inhibiteur de corrosion pour diminuer la production d'hydrogène par corrosion du magnésium métal conditionné dans une matrice cimentaire.

En d'autres termes, la présente invention propose un procédé pour diminuer la production d'hydrogène par corrosion du magnésium métal conditionné dans une matrice cimentaire, ledit procédé consitant à conditionner le magnésium métal dans une matrice cimentaire comprenant au moins un additif inhibiteur de corrosion.

Par « diminuer la production d'hydrogène », on entend, dans le cadre de la présente invention, diminuer, minimiser ou voire inhiber la production d'hydrogène, par rapport à la production d'hydrogène par corrosion du même magnésium métal conditionné dans la même matrice cimentaire mais en absence d'additif inhibiteur de corrosion.

Par « magnésium métal », on entend, dans le cadre de la présente invention, du magnésium métal pur ou se présentant sous forme d'un alliage de magnésium métal. Un alliage de magnésium métal est plus particulièrement choisi dans le groupe constitué par le magnésium/aluminium, le magnésium/zirconium et le magnésium/manganèse. Dans ces alliages, la quantité de magnésium est supérieure à 80%, à 90% et à 95% exprimée en masse par rapport à la masse totale de l'alliage. Les alliages magnésium/zirconium et magnésium/manganèse issus des filières UNGG sont, plus particulièrement, utilisés dans le cadre de la présente invention, l'alliage magnésium/aluminium étant issu de la filière MAGNOX.

Les expressions « magnésium métal » et « magnésium métallique » sont équivalentes et peuvent être utilisées de façon interchangeable.

Le magnésium métal est avantageusement contenu dans un déchet technologique en provenance d'un atelier de démantèlement d'une installation de type UNGG ou d'un atelier de démantèlement, d'exploitation, de maintien ou d'entretien d'une installation de type MAGNOX.

Par « additif inhibiteur de corrosion », on entend, dans le cadre de la présente invention, un additif apte à inhiber la corrosion du magnésium métal. Tout additif permettant d'inhiber la corrosion du magnésium métal et connu de l'homme du métier est utilisable dans le cadre de la présente invention et notamment les additifs aussi bien organiques qu'inorganiques cités dans le document [7]. Avantageusement, l'additif inhibiteur de corrosion mis en oeuvre dans le cadre de la présente invention est un additif minéral (i.e. inorganique). En effet, il existe un risque de radiolyse pour les additifs inhibiteurs de corrosion organiques tels que les carboxylates, les déchets contenant le magnésium métal étant radioactifs.

L'additif inhibiteur de corrosion est choisi dans le groupe constitué par un composé fluoré, un composé à base de stannate, un composé à base de molybdate, un composé à base de silicate, un composé à base de cérium(III), un composé à base de phosphate, un composé à base de (di)chromate et un composé à base de cobalt, un composé à base de carboxylate et leurs mélanges.

Le composé fluoré mis en oeuvre dans le cadre de la présente invention est une source d'ions fluorure. Avantageusement, ce composé est un composé fluoré minéral notamment choisi dans le groupe constitué par le fluorure de sodium, le fluorure de potassium, le fluorure d'ammonium, le fluorure de cérium(III), le fluorure de lithium, le bifluorure de fer, le bifluorure de plomb, le bifluorure de potassium, le bifluorure de sodium, le fluorure de titane, le fluorure de rubidium et leurs mélanges.

Le composé à base de stannate mis en oeuvre dans le cadre de la présente invention est une source d'ions stannate SnO₃²⁻ ou Sn(OH)₆²⁻. Avantageusement, ce composé à base de stannate est choisi dans le groupe constitué par le stannate de potassium, le stannate de sodium, le stannate de baryum, le stannate de zinc, le stannate de cuivre et leurs mélanges.

Le composé à base de molybdate mis en oeuvre dans le cadre de la présente invention est une source d'oxoanions avec du molybdenum notamment de type MoO₄²⁻ou Mo₄O₁₃²⁻. Avantageusement, le composé à base de molybdate est choisi dans le groupe constitué par le molybdate de potassium, le molybdate de sodium, le molybdate de zinc, le molybdate de calcium, le molybdate de zinc et de calcium et leurs mélanges.

Le composé à base de silicate mis en oeuvre dans le cadre de la présente invention est une source d'ions SiO₄⁴⁻. Avantageusement, le composé à base de silicate est choisi dans le groupe constitué par le silicate de calcium, le silicate de potassium, le silicate de sodium, le silicate d'aluminium, le borosilicate de calcium et leurs mélanges.

Le composé à base de cérium(III) mis en oeuvre dans le cadre de la présente invention est une source de cations Ce³⁺. Avantageusement, le composé à base de cérium(III) est choisi dans le groupe constitué par le nitrate de cérium(III), le fluorure de cérium(III), le chlorure de cérium(III), le sulfate de cérium(III) et leurs mélanges.

Le composé à base de phosphate mis en oeuvre dans le cadre de la présente invention est une source d'anions PO₄³⁻ telle que du phosphate de zinc, du phosphate de manganèse ou leur mélange.

Le composé à base de (di)chromate mis en oeuvre dans le cadre de la présente invention est une source d'anions CrO₄² ou d'anions Cr₂O₇²⁻ . Avantageusement, le composé à base de (di)chromate est choisi dans le groupe constitué par le (di)chromate de sodium, le (di)chromate de potassium, le (di)chromate de baryum, le (di)chromate d'aluminium, le (di)chromate de zinc et leurs mélanges.

Le composé à base de cobalt mis en oeuvre dans le cadre de la présente invention est une source de cations Co²⁺. Avantageusement, le composé à base de cobalt est choisi dans le groupe constitué par le phosphate de cobalt, le sulfate de cobalt, l'hydroxyde de cobalt, le nitrate de cobalt et leurs mélanges.

Le composé à base de carboxylate mis en oeuvre dans le cadre de la présente invention est une source d'anions COO⁻ telle que du carboxylate de magnésium, du carboxylate de sodium ou leur mélange.

Le terme « mélange », dans le cadre de la présente invention concerne, d'une part, un mélange d'au moins deux éléments distincts appartenant à des groupes d'additifs inhibiteurs de corrosion identiques ou différents et, d'autre part, un additif inhibiteur de corrosion appartenant à deux groupes d'additifs inhibiteurs de corrosion différents. Par exemple, le fluorure de cérium(III) est une source à la fois d'ions fluorure et de cations cérium(III) et, pour cette raison, appartient à la fois au groupe des composés fluorés et à celui des composés à base de cérium(III).

Par « matrice cimentaire », on entend dans le cadre de la présente invention un matériau solide et poreux à l'état sec, obtenu suite au durcissement d'un mélange plastique contenant des matériaux finement broyés et d' une solution saline, ledit mélange plastique étant capable de faire prise et de durcir au cours du temps. Ce mélange peut également être désigné sous les termes « mélange cimentaire » ou « composition cimentaire ». Toute matrice cimentaire, naturelle ou synthétique, connue de l'homme du métier est utilisable dans le cadre de la présente invention. La matrice cimentaire, dans le cadre de la présente invention, est géopolymérique.

Ainsi, la matrice cimentaire mise en oeuvre dans le cadre de la présente invention est une matrice cimentaire géopolymérique dans laquelle le durcissement est le résultat de la dissolution/polycondensation des matériaux finement broyés du mélange cimentaire dans une solution saline telle qu'une solution saline de fort pH.

La matrice cimentaire géopolymérique est donc un géopolymère. Par « géopolymère », on entend, dans le cadre de la présente invention, un polymère inorganique alumino-silicaté amorphe. Ledit polymère est obtenu à partir d'un matériau réactif contenant essentiellement de la silice et de l'aluminium, activé par une solution fortement alcaline, le rapport massique solide/solution dans la formulation étant faible. La structure d'un géopolymère est composée d'un réseau Si-O-Al formé de tétraèdres de silicates (SiO₄ et d'aluminates (AlO₄) liés en leurs sommets par partage d'atomes d'oxygène. Au sein de ce réseau, se trouve (nt) un (ou plusieurs) cation(s) compensateur(s) de charge également appelé(s) cation(s) de compensation qui permettent de compenser la charge négative du complexe AlO₄⁻. Ledit (ou lesdits) cation(s) de compensation est(sont) avantageusement choisi(s) dans le groupe constitué par les métaux alcalins tels que le lithium (Li), le sodium (Na), le potassium (K), le rubidium (Rb) et le césium (Cs), les métaux alcalino-terreux tels que le magnésium (Mg), le calcium (Ca), le strontium (Sr) et le barium (Ba) et leurs mélanges. Le matériau réactif contenant essentiellement de la silice et de l'aluminium utilisable pour préparer la matrice cimentaire géopolymérique mise en oeuvre dans le cadre de l'invention est avantageusement une source solide contenant des alumino-silicates amorphes. Ces alumino-silicates amorphes sont notamment choisis parmi les minéraux d'alumino-silicates naturels tels que illite, stilbite, kaolinite, pyrophyllite, andalousite, bentonite, kyanite, milanite, grovénite, amésite, cordiérite, feldspath, allophane, etc... ; des minéraux d'alumino-silicates naturels calcinés tels que le métakaolin ; des verres synthétiques à base d'alumino-silicates purs ; du ciment alumineux ; de la ponce ; des sous-produits calcinés ou résidus d'exploitation industrielle tels que des cendres volantes et des laitiers de haut fourneau respectivement obtenus à partir de la combustion du charbon et lors de la transformation du minerai de fer en fonte dans un haut fourneau ; et des mélanges de ceux-ci.

La solution saline de fort pH également connue, dans le domaine de la géopolymérisation, comme « solution d'activation » est une solution aqueuse fortement alcaline pouvant éventuellement contenir des composants silicatés notamment choisis dans le groupe constitué par la silice, la silice colloïdale et la silice vitreuse. Par « fortement alcaline » ou « de fort pH », on entend une solution dont le pH est supérieur à 9, notamment supérieur à 10, en particulier, supérieur à 11 et, plus particulièrement supérieur à 12.

La solution saline de fort pH comprend le cation de compensation ou le mélange de cations de compensation sous forme d'une solution ionique ou d'un sel. Ainsi, la solution saline de fort pH est notamment choisie parmi une solution aqueuse de silicate de sodium (Na₂SiO₃), de silicate de potassium (K₂SiO₂), d'hydroxyde de sodium (NaOH), d'hydroxyde de potassium (KOH), d'hydroxyde de calcium (Ca(OH)₂), d'hydroxyde de césium (CsOH) et leurs dérivés etc....

Dans le cadre de la présente invention, la solution d'activation peut comprendre en outre au moins un additif inhibiteur de corrosion tel que précédemment défini. La concentration en additif(s) inhibiteur(s) de corrosion dans la solution d'activation est avantageusement comprise entre 10 mM et 10 M, notamment entre 100 mM et 8 M et, en particulier, entre 200 mM et 5 M.

La présente invention concerne également un matériau de conditionnement de magnésium métal comprenant une matrice cimentaire géopolymérique dans laquelle le magnésium métal est conditionné, la matrice cimentaire géopolymérique comprenant en outre au moins un additif inhibiteur de corrosion choisi dans le groupe constitué par un composé fluoré, un composé à base de stannate, un composé à base de molybdate, un composé à base de cérium(III), un composé à base de phosphate, un composé à base de (di)chromate, un composé à base de cobalt, un composé à base de carboxylate et leurs mélanges.

Dans le matériau objet de la présente invention présentant une matrice cimentaire géopolymérique, l'additif inhibiteur de corrosion est incorporé dans la matrice cimentaire jusqu'à un taux d'incorporation de 20% en masse par rapport à la masse totale dudit matériau. Avantageusement, ce taux d'incorporation est compris entre 0,01 et 15% et, en particulier, entre 0,1 et 10% en masse par rapport à la masse totale dudit matériau.

Le matériau objet de la présente invention présentant une matrice cimentaire géopolymérique peut se présenter sous diverses formes, de petite ou grande taille, en fonction de l'application recherchée et de la quantité de magnésium métal conditionné. Dans le cadre de la présente invention, le magnésium métal et notamment les déchets le contenant sont encapsulés, enrobés et/ou dispersés dans la matrice cimentaire.

La présente invention concerne également un procédé de préparation d'un matériau de conditionnement de magnésium métal tel que précédemment défini. Ledit procédé de préparation comprend les étapes suivantes successives consistant à :
- incorporer au moins un additif inhibiteur de corrosion dans un mélange cimentaire géopolymérique, puis
- conditionner le magnésium métal ou un déchet contenant du magnésium métal dans le mélange cimentaire géopolymérique ainsi obtenu (i.e. mélange cimentaire géopolymérique + additif(s) inhibiteur(s) de corrosion).

En ce qui concerne l'incorporation de l'additif inhibiteur de corrosion, trois variantes peuvent être envisagées.

Dans une première variante, au moins un additif inhibiteur de corrosion est ajouté au mélange cimentaire sec géopolymérique, préalablement à l'ajout de la solution d'activation respectivement.

Le mélange cimentaire mis en oeuvre dans le procédé de préparation du matériau de conditionnement selon la première variante comprend :
i₁') une solution d'activation i.e. une solution saline à fort pH notamment telle que précédemment définie,
ii₁') une source solide contenant des aluminosilicates amorphes notamment telle que précédemment définie, comprenant au moins un additif inhibiteur de corrosion notamment tel que précédemment défini, et
iii₁') éventuellement des composants silicatés notamment tels que précédemment définis.

Dans une seconde variante, au moins un additif inhibiteur de corrosion est ajouté à la solution d'activation (des matrices cimentaires géopolymériques).

Le mélange cimentaire mis en oeuvre dans le procédé de préparation du matériau de conditionnement selon la seconde variante comprend :
i₂') une solution d'activation i.e. une solution saline à fort pH notamment telle que précédemment définie, comprenant au moins un additif inhibiteur de corrosion notamment tel que précédemment défini,
ii₂') une source solide contenant des aluminosilicates amorphes notamment telle que précédemment définie, et
iii₂') éventuellement des composants silicatés notamment tels que précédemment définis.

Les éléments qui composent le mélange cimentaire peuvent être mélangés ensemble soit par groupe, soit simultanément. Les protocoles mis en oeuvre sont des protocoles classiques de la préparation de géopolymères.

Dans une troisième variante, au moins un additif inhibiteur de corrosion est ajouté au mélange cimentaire suite à l'ajout de la solution d'activation (cas des matrices cimentaires géopolymériques). Dans cette variante, l'additif inhibiteur de corrosion est ajouté au coulis.

Le mélange cimentaire mis en oeuvre dans le procédé de préparation du matériau de conditionnement selon la troisième variante comprend :
i₃') une solution d'activation i.e. une solution saline à fort pH notamment telle que précédemment définie,
ii₃') une source solide contenant des aluminosilicates amorphes notamment telle que précédemment définie,
iii₃') au moins un additif inhibiteur de corrosion notamment tel que précédemment défini, et
iv₃') éventuellement des composants silicatés notamment tels que précédemment définis.

Les additifs inhibiteurs de corrosion susceptibles d'être utilisés dans le cadre de la présente invention sont des composés accessibles dans le commerce qui ne nécessitent aucune préparation particulière avant l'introduction dans le mélange cimentaire géopolymérique. Toutefois, si nécessaire, l'homme du métier saura facilement préparer un (ou plusieurs) additif(s) inhibiteur(s) de corrosion par des techniques connues.

Avant d'être incorporé dans le mélange cimentaire sec, dans la solution d'activation ou dans le coulis, l'additif inhibiteur de corrosion se présente avantageusement sous forme solide telle qu'une poudre ou sous forme liquide. Aussi, l'introduction de cet additif dans le mélange cimentaire sec, dans la solution d'activation ou dans le coulis est un protocole simple consistant en un mélange, une dissolution ou en une dilution.

Si plusieurs additifs inhibiteurs de corrosion sont utilisés, ils peuvent être introduits selon la même variante choisie parmi les trois variantes ci-dessus ou selon des variantes différentes, choisies parmi les trois variantes ci-dessus.

Suite à l'étape d'incorporation d'au moins un additif inhibiteur de corrosion dans un mélange cimentaire géopolymérique dans le procédé selon l'invention, le mélange cimentaire dans lequel est incorporé l'additif inhibiteur de corrosion est utilisé pour conditionner le magnésium métal et notamment des déchets contenant du magnésium métal. Cette étape consiste plus particulièrement à introduire (ou à disperser) le magnésium métal ou les déchets dans le mélange cimentaire ou à recouvrir (à enrober, à encapsuler, à emprisonner ou à bloquer) le magnésium métal ou les déchets avec le mélange cimentaire.

Dans une forme particulière de mise en oeuvre, le magnésium métal ou les déchets notamment technologiques le contenant sont placés dans un conteneur de type fût puis le mélange cimentaire dans lequel est incorporé l'additif inhibiteur de corrosion est coulé dans le conteneur de façon à remplir tout l'espace libre entre le magnésium métal ou les déchets.

Suite à l'étape de conditionnement du magnésium métal ou du déchet le contenant dans un mélange cimentaire contenant au moins un additif inhibiteur de corrosion dans le procédé selon l'invention, le mélange cimentaire dans lequel sont incorporés l'additif inhibiteur de corrosion et le magnésium métal (ou les déchets le contenant) est avantageusement soumis à des conditions permettant le durcissement de la matrice cimentaire. Ainsi, suite au conditionnement du magnésium métal ou d'un déchet contenant du magnésium métal dans le mélange cimentaire géopolymérique, le mélange cimentaire est soumis à des conditions permettant le durcissement de la matrice cimentaire. Toute technique connue de l'homme du métier pour faire durcir un mélange cimentaire géopolymérique est utilisable lors de l'étape de durcissement du procédé.

Ce durcissement comprend avantageusement une étape de cure et/ou une étape de séchage. Lorsque l'étape de durcissement comprend une étape de cure, cette dernière peut se faire par humidification de l'atmosphère entourant le mélange cimentaire dans lequel sont incorporés l'additif inhibiteur de corrosion et le magnésium métal (ou les déchets le contenant) ou par application d'un enduit imperméable sur ledit mélange. Cette étape de cure peut être mise en oeuvre sous une température comprise entre 10 et 60°C, notamment entre 20 et 50°C et, en particulier, entre 30 et 40°C et peut durer entre 1 et 40 jours, notamment entre 5 et 30 jours et, en particulier, entre 10 et 20 jours.

Lorsque l'étape de durcissement comprend une étape de séchage, cette dernière peut se faire à une température comprise entre 30 et 90°C, notamment entre 40 et 80°C et, en particulier, entre 50 et 70°C et peut durer entre 6 h et 10 jours, notamment entre 12 h et 5 jours et, en particulier, entre 24 et 60 h. Avantageusement, l'étape de durcissement comprend une étape de cure suivie par une étape de séchage, telles que précédemment définies.

De plus, préalablement au durcissement du mélange cimentaire dans lequel sont incorporés l'additif inhibiteur de corrosion et le magnésium métal (ou les déchets le contenant), ce dernier peut être placé dans des moules de façon à lui conférer une forme pré-déterminée suite à ce durcissement.

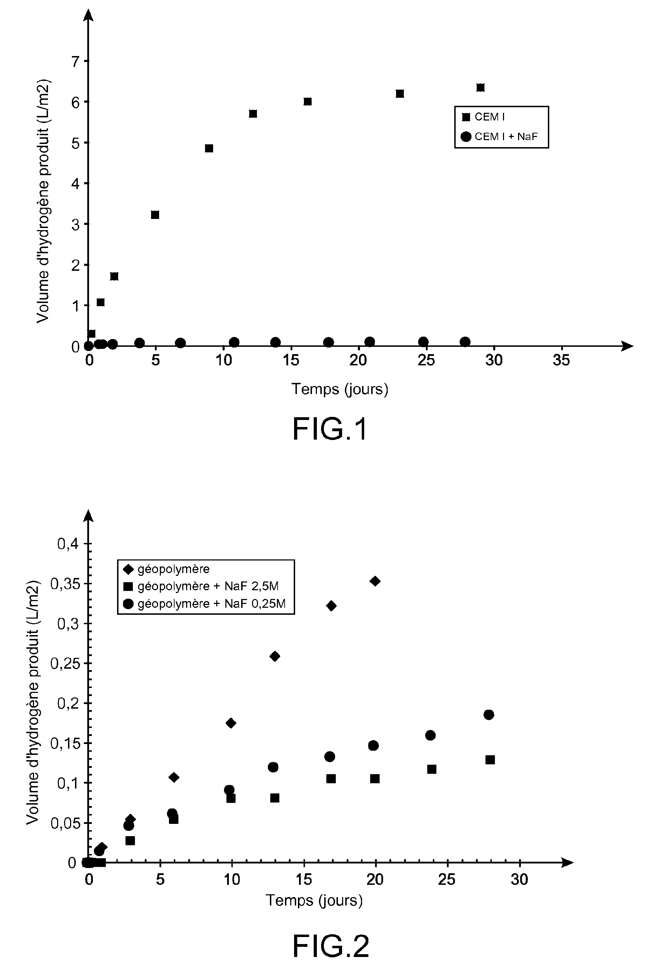

D'autres caractéristiques et avantages de la présente invention apparaîtront encore à l'homme du métier à la lecture des exemples ci-dessous donnés à titre illustratif et non limitatif, en référence aux figures annexées. La Figure 1 et les modes de réalisation mettant en oeuvre du ciment Portland CEM I ne font pas partie de l'invention.

### BRÈVE DESCRIPTION DES DESSINS

La Figure 1 présente l'influence du fluorure présent dans l'eau de gâchage d'un ciment CEM I sur le dégagement d'hydrogène en présence de magnésium métal.
La Figure 2 présente l'influence du fluorure présent dans la solution d'activation d'un géopolymère sur le dégagement d'hydrogène en présence de magnésium métal.

### EXPOSÉ DÉTAILLÉ DE MODES DE RÉALISATION PARTICULIERS

### 1. Préparation de coulis avec du fluorure de sodium pour l'immobilisation du magnésium métal.

Des coulis à base de fluorures ont été préparés à partir de différents liants. Les deux liants utilisés pour la préparation des coulis sont les suivants :
- Géopolymère (coulis n°1 et n°2)
- Ciment portland CEM I (coulis n°3)

Des solutions aqueuses avec du fluorure de sodium (Merck, 99%) ont été préparées à une concentration de 2,58 M (coulis n°1 et 3) et à 0,258 M (coulis n°2). Ces solutions sont utilisées dans les coulis n°1 et n°2 comme solution d'activation et comme solutionde gâchage pour le coulis n°3.

Les produits employés pour le géopolymère sont du métakaolin de Pieri Premix MK (Grade Construction Products), du NaOH (Prolabo, 98%) et du SiO₂ (Tixosil, Degussa).

Le coulis à base de Portland a été préparé avec du ciment de type CEM I 52.5 N (Lafarge Le teil).

Les compositions des différents coulis sont reportées dans le tableau 1 ci-après.

**Tableau 1 : Composition des différents coulis pour l'immobilisation du magnésium**

| | Composition liant | Eau/ciment ou eau/Métakaolin | Masse en NaF (en g) |
|---|---|---|---|
| coulis 1 : géoplymère | Métakaolin : 87,8 g | 0, 68 | 6,3 |
| | SiO₂ : 20,02 g | | |
| | NaOH : 22,21 g | | |
| coulis 2 : géoplymère | Métakaolin : 87,8 g | 0, 68 | 0, 63 |
| | SiO₂ : 20,02 g | | |
| | NaOH : 22,21 g | | |
| coulis 3 : Portland CEM I | Ciment CEM I : 80 g | 0,4 | 3,4 |

Après gâchage des coulis pendant 1 min, ils ont été mis en contact avec du magnésium métal et le dégagement d'hydrogène a été mesuré en fonction du temps.

### 2. Influence du fluorure sur le dégagement d'hydrogène des coulis en présence de magnésium métal.

Afin de déterminer l'influence de la présence de fluorure sur le dégagement d'hydrogène des coulis n°1 2 et 3 en présence de magnésium métal, des analyses dans un pot hermétique ont été réalisées et la comparaison avec les coulis n°1, 2 et 3 sans fluorure a été réalisée en fonction du temps.

Sur la Figure 1, est reporté le volume d'hydrogène produit par des coulis à base de CEM I + NaF (coulis n°3) et CEM I sans NaF en présence de magnésium métal. Une diminution claire du volume d'hydrogène produit par le magnésium métal est induite en présence de fluorure dans l'eau de gâchage.

Sur la Figure 2, les résultats sur le géopolymère montrent que l'augmentation de la quantité de fluorure dans la solution d'activation induit une diminution de la quantité d'hydrogène produite par le magnésium métal.

### 3. Conclusions.

L'incorporation d'inhibiteurs de corrosion du magnésium (fluorure, silicates...) dans la solution d'activation d'un géopolymère permet de diminuer la quantité d'hydrogène produite par le magnésium métal dans une matrice à base de polymères alumino-silicatés amorphes.

### RÉFÉRENCES

1. Article de Morris et al., 2009, "Contingency options for the drying, conditioning and packaging of Magnox spent fuel in the UK", Proceedings of the 12th International Conférence on Environmental Remediation and Radioactive Waste Management, ICEM2009, October 11-15, 2009, Liverpool, UK.
2. Article de Fairhall et Palmer, 1992, "The encapsulation of Magnox in cement in the United Kingdom", Cement and Concrete Research, vol. 22, pages 293-298.
3. Article de Spasova et Ojovan, 2008, "Characterisation of Al corrosion and its impact on the mechanical performance of composite cement wasteforms by the acoustic émission technique", Journal of Nuclear Materials, vol. 375, pages 347-358.
4. Article de Setiadi et al., 2006, "Corrosion of aluminium and magnesium in BFS composite cements", Advances in Applied Ceramics, vol. 105, pages 191-196.
5. Article de Zosin et al., 1998, "Geopolymer materials based on magnesia-iron slags for normalization and storage of radioactive wastes", Atomic Energy, vol. 85, pages 510-514.
6. Article de Turner et al., 2007, "Small scale fire testing of polymer as an encapsulant for Magnox waste", Proceedings of the 15th International Symposium on the Packaging and Transportation of Radioactive Materials (PATRAM 2007), Miami, Florida.
7. Article de Gray et Luan, 2002, "Protective coatings on magnesium and its alloys - a critical review", Journal of Alloys and Compounds, vol. 336, pages 88-113.
8. Article de Gulbrandsen et al., 1993, "The passive behaviour of Mg in alkaline fluoride solutions. Electrochemical and electron microscopical investigations", Corrosion Science, vol. 34, pages 1423-1440.
9. Article de Song et StJohn, 2004, "Corrosion behaviour of magnesium in ethylene glycol", Corrosion Science, vol. 46, pages 1381-1399.
10. Demande de brevet EP 0 995 785 déposée au nom de Texaco Development Corporation et publiée le 26 avril 2000.
11. Demande de brevet chinois N° 101358343 déposée au nom de University Jiaotong SouthWest et publiée le 4 février 2009.

## Revendications

1. Utilisation d'au moins un additif inhibiteur de corrosion pour diminuer la production d'hydrogène par corrosion du magnésium métal conditionné dans une matrice cimentaire géopolymérique,
ledit additif inhibiteur de corrosion étant choisi dans le groupe constitué par un composé fluoré, un composé à base de stannate, un composé à base de molybdate, un composé à base de cérium(III), un composé à base de phosphate, un composé à base de (di)chromate, un composé à base de cobalt, un composé à base de carboxylate et leurs mélanges.

2. Utilisation selon la revendication 1, **caractérisée en ce que** ledit magnésium métal est pur ou se présente sous forme d'un alliage tel qu'un alliage de magnésium/aluminium, de magnésium/zirconium ou de magnésium/manganèse.

3. Matériau de conditionnement de magnésium métal comprenant une matrice cimentaire géopolymérique dans laquelle le magnésium métal est conditionné, la matrice cimentaire géopolymérique comprenant en outre au moins un additif inhibiteur de corrosion choisi dans le groupe constitué par un composé fluoré, un composé à base de stannate, un composé à base de molybdate, un composé à base de cérium(III), un composé à base de phosphate, un composé à base de (di)chromate, un composé à base de cobalt, un composé à base de carboxylate et leurs mélanges.

4. Matériau de conditionnement selon la revendication 3, **caractérisé en ce que** ledit (ou lesdits) additif(s) inhibiteur(s) de corrosion est(sont) incorporé(s) dans la matrice cimentaire jusqu'à un taux d'incorporation de 20% en masse par rapport à la masse totale dudit matériau, ce taux d'incorporation étant avantageusement compris entre 0,01 et 15% et, en particulier, entre 0,1 et 10% en masse par rapport à la masse totale dudit matériau.

5. Procédé de préparation d'un matériau de conditionnement tel que défini à la revendication 3 ou 4, **caractérisé en ce que** ledit procédé de préparation comprend les étapes suivantes successives consistant à :
- incorporer au moins un additif inhibiteur de corrosion tel que défini à la revendication 3 dans un mélange cimentaire géopolymérique, puis
- conditionner du magnésium métal ou un déchet contenant du magnésium métal dans le mélange cimentaire géopolymérique ainsi obtenu.

6. Procédé de préparation selon la revendication 5, **caractérisé en ce qu'**au moins un additif inhibiteur de corrosion est ajouté au mélange cimentaire sec géopolymérique, préalablement à l'ajout de la solution d'activation.

7. Procédé de préparation selon la revendication 5 ou 6, **caractérisé en ce qu'**au moins un additif inhibiteur de corrosion est ajouté à la solution d'activation.

8. Procédé de préparation selon l'une quelconque des revendications 5 à 7, **caractérisé en ce qu'**au moins un additif inhibiteur de corrosion est ajouté au mélange cimentaire suite à l'ajout de la solution d'activation.

9. Procédé de préparation selon l'une quelconque des revendications 5 à 8, **caractérisé en ce que**, suite au conditionnement du magnésium métal ou d'un déchet contenant du magnésium métal dans le mélange cimentaire géopolymérique, le mélange cimentaire est soumis à des conditions permettant le durcissement de la matrice cimentaire.

## Patentansprüche

1. Verwendung wenigstens eines korrosionshemmenden Additivs zur Verringerung der Wasserstoffproduktion durch Korrosion des metallischen Magnesiums, das in einer Geopolymer-Zementmatrix konditioniert ist,
wobei das korrosionshemmende Additiv ausgewählt ist aus der Gruppe gebildet durch eine Fluorverbindung, eine Verbindung auf Basis von Stannat, eine Verbindung auf Basis von Molybdat, eine Verbindung auf Basis von Cer (III), eine Verbindung auf Basis von Phosphat, eine Verbindung auf Basis von (Di)Chromat, eine Verbindung auf Basis von Kobalt, eine Verbindung auf Basis von Carboxylat und ihre Mischungen.

2. Verwendung nach Anspruch 1, **dadurch gekennzeichnet, dass** das metallische Magnesium rein ist, oder in Form einer Legierung vorliegt, wie zum Beispiel eine Legierung aus Magnesium-Aluminium, aus Magnesium-Zirkon oder aus Magnesium-Mangan.

3. Material zur Konditionierung von metallischem Magnesium, umfassend eine Geopolymer-Zementmatrix, in der das metallische Magnesium konditioniert ist, wobei die Geopolymer-Zementmatrix ferner wenigstens ein korrosionshemmendes Additiv umfasst, ausgewählt aus der Gruppe gebildet durch eine Fluorverbindung, eine Verbindung auf Basis von Stannat, eine Verbindung auf Basis von Molybdat, eine Verbindung auf Basis von Cer (III), eine Verbindung auf Basis von Phosphat, eine Verbindung auf Basis von (Di)Chromat, eine Verbindung auf Basis von Kobalt, eine Verbindung auf Basis von Carboxylat und ihre Mischungen.

4. Material zur Konditionierung nach Anspruch 3, **dadurch gekennzeichnet, dass** das (oder die) korrosionshemmende Additiv(e) in die Zementmatrix bis zu einer Inkorporationsrate von 20 Masse % bezogen auf die Gesamtmasse des Materials inkorporiert ist / sind, wobei diese Inkorporationsrate vorzugsweise zwischen 0,01 und 15 Masse % und insbesondere zwischen 0,1 und 10 Masse % bezogen auf die Gesamtmasse des Materials enthalten ist.

5. Verfahren zur Herstellung eines Materials zur Konditionierung wie in Anspruch 3 oder 4 definiert, **dadurch gekennzeichnet, dass** das Verfahren zur Herstellung die folgenden aufeinanderfolgenden Schritte umfasst:
- Inkorporieren wenigstens eines korrosionshemmenden Additivs wie in Anspruch 3 definiert in eine Geopolymer-Zementmischung, und anschließend
- Konditionieren des metallischen Magnesiums oder eines Abfalls, der metallisches Magnesium enthält, in der derart erhaltenen Geopolymer-Zementmischung.

6. Verfahren zur Herstellung nach Anspruch 5, **dadurch gekennzeichnet, dass** wenigstens ein korrosionshemmendes Additiv zu der trockenen Geopolymer-Zementmischung hinzugefügt wird, bevor die Aktivierungslösung hinzugefügt wird.

7. Verfahren zur Herstellung nach Anspruch 5 oder 6, **dadurch gekennzeichnet, dass** wenigstens ein korrosionshemmendes Additiv zu der Aktivierungslösung hinzugefügt wird.

8. Verfahren zur Herstellung nach einem der Ansprüche 5 bis 7, **dadurch gekennzeichnet, dass** wenigstens ein korrosionshemmendes Additiv zu der Zementmischung im Anschluss an die Hinzufügung der Aktivierungslösung hinzugefügt wird.

9. Verfahren zur Herstellung nach einem der Ansprüche 5 bis 8, **dadurch gekennzeichnet, dass** im Anschluss an die Konditionierung des metallischen Magnesiums oder eines Abfalls, der metallisches Magnesium enthält, in der Geopolymer-Zementmischung, die Zementmischung Bedingungen ausgesetzt wird, die das Aushärten der Zementmatrix erlauben.

## Claims

1. Use of at least one corrosion-inhibiting additive to reduce the production of hydrogen via corrosion of magnesium metal conditioned in a geopolymeric cement matrix,
said corrosion-inhibiting additive being chosen from the group consisting of a fluorinated compound, stannate compound, molybdate compound, cerium(III) compound, phosphate compound, (di)chromate compound, cobalt compound, carboxylate compound and mixtures thereof.

2. Use according to claim 1, **characterized in that** said magnesium metal is pure or is in the form of an alloy such as an alloy of magnesium/aluminium, of magnesium/zirconium or of magnesium/manganese.

3. Material for conditioning magnesium metal comprising a geopolymeric cement matrix in which the magnesium metal is conditioned, the geopolymeric cement matrix further comprising at least one corrosion-inhibiting additive chosen from the group consisting of a fluorinated compound, stannate compound, molybdate compound, cerium(III) compound, phosphate compound, (di)chromate compound, cobalt compound, carboxylate compound and mixtures thereof.

4. Conditioning material according to claim 3, **characterized in that** said corrosion-inhibiting additive(s) is/are incorporated in the cement matrix up to a rate of incorporation of 20% by weight relative to the total weight of said material, this proportion of incorporation advantageously being between 0.01 and 15% and particularly between 0.1 and 10% by weight relative to the total weight of said material.

5. Method for preparing a conditioning material such as defined in claim 3 or 4, **characterized in that** said preparation method comprises the following successive steps of:
- incorporating at least one corrosion-inhibiting additive such as defined in claim 3 in a geopolymeric cement matrix, then
- conditioning the magnesium metal or waste containing magnesium metal in the geopolymeric cement mix thus obtained.

6. Preparation method according to claim 5, **characterized in that** at least one corrosion-inhibiting additive is added to the dry geopolymeric cement mix prior to adding the activation solution.

7. Preparation method according to claim 5 or 6, **characterized in that** at least one corrosion-inhibiting additive is added to the activation solution.

8. Preparation method according to any of claims 5 to 7, **characterized in that** at least one corrosion-inhibiting additive is added to the cement mix after adding the activation solution.

9. Preparation method according to any of claims 5 to 8, **characterized in that**, after conditioning the magnesium metal or waste containing magnesium metal in the geopolymeric cement mix, the cement mix is subjected to conditions allowing the setting of the cement matrix.
